# EUROPEAN PATENT SPECIFICATION

(11) **EP 3 236 693 B1**
(45) Date of publication and mention of the grant of the patent: **13.05.2020**
(21) Application number: 16290071.6
(22) Date of filing: 20.04.2016
(51) Int. Cl.: H04W 36/02

(54) **METHOD AND DEVICE FOR WIRELESS DATA TRANSMISSION**
VERFAHREN UND VORRICHTUNG ZUR DRAHTLOSEN DATENÜBERTRAGUNG
PROCÉDÉ ET DISPOSITIF DE TRANSMISSION DE DONNÉES SANS FIL

(43) Date of publication of application: 25.10.2017
(73) Proprietor: Alcatel Lucent, 91620 Nozay (FR)
(72) Inventor: GEBERT, Jens, 70435 Stuttgart (DE); AMBROSY, Anton, 70435 Stuttgart (DE); AZIZ, Danish, 70435 Stuttgart (DE); BAKKER, Hajo, 70435 Stuttgart (DE); BRAUN, Volker, 70435 Stuttgart (DE); HALBAUER, Hardy, 70435 Stuttgart (DE)
(74) Representative: DREISS Patentanwälte PartG mbB

(56) References cited:
- US-A1- 2007 047 488
- US-A1- 2008 062 911
- US-A1- 2008 188 223
- US-A1- 2012 243 461
- US-A1- 2015 117 313

## Description

### Field of the invention

The invention concerns a method and device for wireless data transmission.

### Background

In a radio access network base stations provide wireless connectivity to user equipment in a coverage area. The base station provides typically low-frequency band coverage to the user equipment.

Regarding radio access networks, US 2015/0117313 A1 discloses a method of selective bicasting. US 2008/0188223 A1 discloses a method and system for performing a handover of mobile equipment.

In a radio access network base stations and user equipment operate for example according to the long term evolution standard or the long term evolution advanced standard or the upcoming 5G standard. This way the radio access network provides low-frequency band coverage.

Millimeter wave radio access points or other high-frequency band radio access points and compatible user equipment may be used in a radio access network for capacity enhancement, i.e. higher data rates. They operate with radio signals in a millimeter wave frequency band, i.e. within the band of radio frequencies in the electromagnetic spectrum from 30 to 300 gigahertz. High data throughput is achievable by millimeter wave radio transmission. In general any high-frequency band radio access point operating with frequencies larger than 6 gigahertz may be used.

To provide redundant coverage, multiple high-frequency band radio access points are placed within the coverage area of a low-frequency band base station.

Due to obstructions in the coverage area of high-frequency band radio access points, the data transmission quality may suffer. This may result in that low-frequency band nodes can only use a limited bandwidth (capacity), which allows only "low" data rates. Millimeter wave radio access points can use high bandwidth which allows very high data rates. There will be obstructions for high-frequency band radio access points and not for low-frequency band nodes.

When the user equipment moves relative to the high-frequency band radio access point or there are changes in the environment, e.g. a truck blocks the data transmission, it may lose the coverage area of that high-frequency band radio access point or the Line Of Sight between user equipment and high-frequency band radio access point is blocked for a certain time.

Due to the propagation characteristics of high-frequency band or millimeter wave radio signals, link blockage may appear in the link between a user equipment and a millimeter wave radio point suddenly due to obstruction in one or all possible paths between a high-frequency band access point and the user equipment. This blockage may cause high interruption times.

### Summary

It is therefore an objective of the present invention to provide a very fast and reliable handover from one high-frequency band radio access point to another high-frequency band radio access point in the transmission of data via high-frequency band radio connection. This enables data transmission with high data rates and low latency.

This goal is achieved by a method for wireless data transmission comprising:
sending a first data packet to a first high-frequency band radio access point, wherein the first data packet is addressed to a user equipment,
sending a second data packet to a second high-frequency band radio access point, wherein the second data packet is addressed to the user equipment,
   wherein
the first data packet comprising an indication for the first high-frequency band radio access point to buffer the received data packet, wherein buffered received data is to be transmitted to the user equipment only upon receipt of an additional transmit request, and
the second data packet comprising an indication for the second high-frequency band radio access point to transmit the received data packet to the user equipment.

Advantageously upon detection of an interruption of the wireless data transmission via the second high-frequency band radio access point, the additional transmit request is sent to the first high-frequency band radio access point.

This goal is further achieved by a method for wireless data transmission at a first high-frequency band radio access point comprising:
receiving a data packet addressed to a user equipment,
inspecting the received data packet,
   wherein
depending on the result of the inspection:
   transmitting the received data to the user equipment,
   buffering the received data, wherein buffered received data is transmitted to the user equipment only upon receipt of an additional transmit request, or
   releasing buffered data.

Advantageously upon detection of an interruption of the wireless data transmission via a second high-frequency band radio access point, the additional transmit request is received by the first high-frequency band radio access point.

Preferably an error message is sent to a network node or to another high-frequency band radio access point.

Preferably buffered received data is to be transmitted to the user equipment only upon receipt of an additional transmit request, preferably by the network node.

The invention concerns a network node and a high-frequency band radio access point, operable to interact by the method as well.

Further developments of the invention can be gathered from the dependent claims and the following description.

### Brief description of the figures

Figure 1 schematically depicts part of a radio access network,
Figure 2 schematically depicts part of a signal path according to a configuration in an exemplary architecture of a radio access network,
Figure 3 schematically depicts a first message sequence diagram for handling multiple high-frequency band radio access points,
Figure 4 schematically depicts a second message sequence diagram for handling direct message exchange between high-frequency band radio access points,
Figure 5 schematically depicts a third message sequence diagram for multiple high-frequency band radio access point handling,
Figure 6 schematically depicts a fourth message sequence diagram for error handling.

### Description of the embodiments

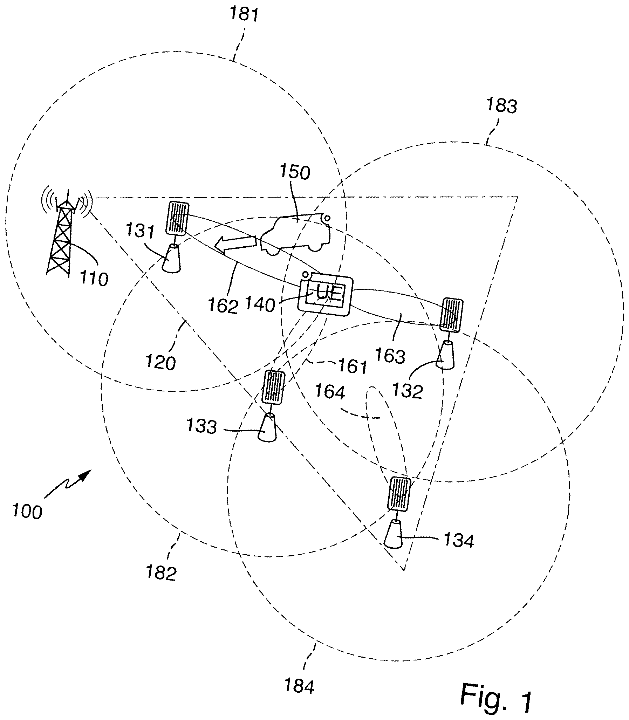

Figure 1 schematically depicts part of a radio access network 100. The radio access network 100 provides multi-connectivity with multiple radio access technologies.

A network node 110, for example an evolved node B or a future 5G node, referred to as eNB below, provides a low-frequency band connectivity according to one of the aforementioned standards in a coverage area 120. The network node 110 is for example a base station 110 configured as eNB according to the long term evolution standard or the upcoming 5G standard. The network node 110 may be additionally or alternatively configured as Radio Access Network (RAN) Controller.

A plurality of high-frequency band radio access points 131, 132, 133, 134 preferable millimeter wave radio access points or access points operating above 6 GHz, provide radio access in respective coverage areas 181, 182, 183, 184 using beams 161, 162, 163, 164 that overlap at least temporarily, at least partially with the coverage area 120 and the location of the user equipment 140. Beams 161, 162, 163, 164 are exemplary beams, the coverage area 181, 182, 183, 184 is the sweep area of the beams, i.e. sectors within which respective beams 161, 162, 163, 164 can be controlled. A beam 161, 162, 163, 164 is a dedicated beam for user equipment 140 if it is controlled to overlap with the location of user equipment 140. Each high-frequency band access point may provide a certain number of dedicated beams 161, 162, 163, 164 depending on the location of user equipment 140.

The plurality of high-frequency band radio access points 131, 132, 133, 134 and the network node 110 are adapted to exchange data and access points related control messages, e.g. via Xn interfaces (not depicted), for specific user equipment.

User related control messages can be sent by the network node 110 to user equipment 140 directly or to user equipment 140 via any of the high-frequency band radio access points 131, 132, 133, 134.

User equipment 140 is configurable to receive data via a wireless link provided by the network node 110 and/or any of the plurality of high-frequency band radio access points 131, 132, 133, 134 respectively.

In the example user equipment 140 is configured to permanently receive data via either of the wireless links.

One goal of multi-connectivity is to achieve high data throughput and low latency. Faster handover within multiple high-frequency band radio access points is therefore essential.

The high-frequency band radio access points 131, 132, 133, 134 are in the example configured to ensure the delivery of high data rates to user equipment 140.

Possible paths for the radio signals are line of sight paths or non-line of sight paths between base station 110, high-frequency band radio access points 131, 132, 133, 134 and user equipment 140.

In an urban environment a high-frequency band radio channel is generally characterized by a low number of possible radio propagation paths. From any possible paths between high-frequency band radio access points 131, 132, 133, 134 and user equipment 140 in most cases probably only one path will be used for transmission with high gain, narrow half-power beam width antenna beams. Due to the propagation characteristics of high-frequency band waves, in particular the millimeter waves, link blockage may appear due to obstruction in a line of sight or non-line of sight connection between any high-frequency band radio access point 131, 132, 133, 134 and user equipment 140.

This means that transmission quality is sensitive to blocking effects. This blockage may cause high interruption times. Therefore reliability of the data transmission is eventually poor.

A blocking effect can occur if an obstacle 150 is in the transmission path. In the example of figure 1 the obstacle 150 is a vehicle that moves into the beam 162. This may lead to blocking at a line of sight transmission path between the serving high-frequency band radio access point 131 and user equipment 140.

Thereby in the example the data transmission via high-frequency band radio access point 131 suddenly fails.

Blockage may as well be caused by sudden user movement, i.e. sudden movement of the user equipment 140, relative to the serving high-frequency band radio access point 131.

To mitigate this effect, e.g. to minimize interruption times or ideally even avoid interruptions, redundant coverage of high-frequency band radio access points 131, 132, 133, 134 are provisioned as described below.

The transmission of data via the high-frequency band radio access points 131, 132, 133, 134 is in the example supported by the low-frequency band node with a larger coverage area 120.

This means that data transmitted by a high-frequency band radio access point 131, 132, 133, 134, is in the example received from the base station 110. This data can be received from any other network entity as well, e.g. from a central server that is connected to the high-frequency band radio access points 131, 132, 133, 134.

On a network deployment as depicted in Figure 1, due to fast handover requirement, the network node 110 is operable as controlling entity to transmit data via the high-frequency band radio access points 131, 132, 133, 134 according to the method described below. The network node 110 may for example be located in the edge cloud or core network as well. In the example base station 110 is configured as controlling entity.

Embodiments of the invention are not limited to the use of dedicated beams. Although the problem signalled, and solved, is described in a scenario using dedicated beams and millimeter wave or high-frequency band access points, the solution may be applied to other forms of connecting with user equipment, e.g. using less-dedicated beams or not dedicated beams.

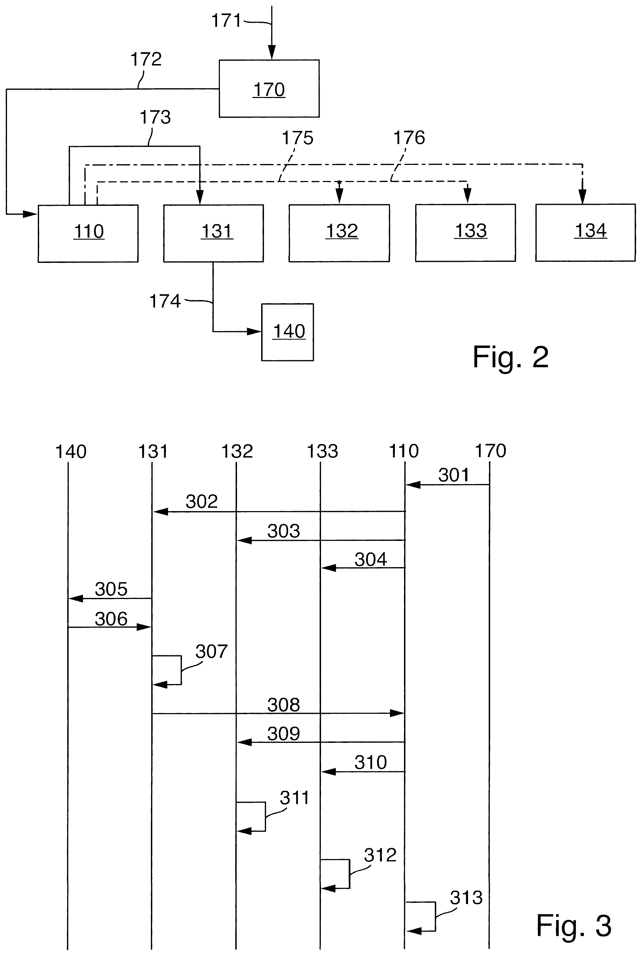

Figure 2 illustrates an exemplary architecture where the serving high-frequency band radio access point 131 is selected to receive a data packet addressed to the user equipment 140, wherein the data packet includes an indication to transmit the data, e.g. in a flag "transmit data".

The serving high-frequency band radio access point 131 functions as the initial serving node based on a measurement report by user equipment 140 towards the base station 110, so it will be configured for this user equipment 140 and in the example will receive forwarded Protocol Data Units, e.g. comprising Packet Data Convergence Protocol (PDCP) data and/or Network Control Signaling (NCS) data, via a data link 173 from base station 110 which will be transmitted to the user equipment 140.

The user equipment 140 is within coverage areas 161, 163 of the high-frequency band radio access points 132, 133 in this example. Hence the corresponding high-frequency band radio access points 132, 133 are selected to receive a data packet addressed to the user equipment 140 via data links 175, 176. As the radio access points are not acting as a serving node, the data packet includes an indication to buffer the data, e.g. a flag "buffer data".

The corresponding high-frequency band radio access points 132, 133 function as redundant node based on a measurement report by user equipment 140 towards the base station 110, so they will be configured for this user equipment 140 and will receive in the example forwarded Protocol Data Units, e.g. comprising PDCP data and/or NCS data, via a data link 175 and 176 respectively from base station 110 which will be buffered. Buffered received data is to be transmitted to the user equipment 140 only upon receipt of an additional transmit request.

In the example, the base station 110, configured as controlling entity, may send the transmit request as described below. Alternatively the serving high-frequency band radio access point 131 may send the transmit request. Likewise the user equipment 140, which is aware of all potential high-frequency band access points, may send the transmit request.

The connection between serving high-frequency band radio access point 131 and the user equipment 140 is via an air interface 174.

User equipment 140 is not within the coverage area 164 of high-frequency band radio access point 134. Hence high-frequency band radio access point 134 is not selected to receive any data addressed to the user equipment 140.

Downlink data 171 enters the radio access network 100 via a core unit 170 and is received by the base station 110 via a data link 172 from the core unit 170.

In an exemplary embodiment, base station 110 is configured as master evolved node B, and the high-frequency band radio access points 131, 132, 133, 134 are configured as small cell or secondary evolved node B. In this case, an information element regarding the indication to the high-frequency band radio access points 131, 132, 133, 134, e.g. the flag "transmit data" or "buffer data", may be added to Package Data Convergence Protocol messages or X2-messages exchanged between the master evolved node B and the small cell or secondary evolved node B based on 3GPP TS 36.300 V13.1.0 (2015-09). The information element may be added into existing X2-messages. It is also possible to use different mechanisms, e.g. a (new) separate message header.

Downlink data 171 is transmitted in data packets addressed to the user equipment 140. According to the example, each data packet of downlink data 171 sent by base station 110 addressed to the user equipment 140 include either the flag "buffer data" or the flag "transmit data".

The person skilled in the art readily understands that instead of using these flags, any other indication for the high-frequency band radio access points 131, 132, 133, 134 to transmit data to the user equipment 140 or to buffer the received data can be used.

Examples of data transmission and handover are described below referencing figures 3 to 6.

Figure 3 schematically depicts a first message sequence diagram for handling multiple high-frequency band radio access points 131, 132, 133.

The use case is high data rate, low latency enabled by very fast handovers. In this example, the base station 110 as controller, i.e. the controlling entity, transmits downlink user data to multiple high-frequency band radio access points but in this case only one high-frequency band radio access point is selected to transmit data to the user equipment 140. The other high-frequency band radio access points buffer the data. In case of delivery failure, these other high-frequency band radio access points are enabled to transmit data very fast to the user equipment 140.

Downlink data 171 is transmitted in packets in the example. A data packet addressed to the user equipment 140 is send from the core unit 170 to the controlling entity, e.g. base station 110, in a first message 301.

Upon receipt of the first message 301, the controlling entity, e.g. base station 110, sends a data packet in a second message 302 to high-frequency band radio access point 131. The data packet in second message 302 is addressed to user equipment 140. The data packet in second message 302 comprises an indication for the high-frequency band radio access point 131 to transmit the received data packet to the user equipment 140. This means that the high-frequency band radio access point 131 is selected as serving high-frequency band radio access point. To that end, in the example, the data packet in the second message 302 contains the flag "transmit data".

Upon receipt of the first message 301, the controlling entity, e.g. base station 110, sends another data packet in a third message 303 to high-frequency band radio access point 132. The data packet in third message 303 is addressed to user equipment 140. The data packet in third message 303 comprises an indication for the high-frequency band radio access point 132 to buffer the received data packet, wherein buffered received data is to be transmitted to the user equipment only upon receipt of an additional transmit request. This means that the high-frequency band radio access point 132 is selected as redundant high-frequency band radio access point. To that end, in the example, the data packet in the third message 303 contains the flag "buffer data".

Upon receipt of the first message 301, the controlling entity, e.g. base station 110, sends another data packet in a fourth message 304 to high-frequency band radio access point 133. The data packet in fourth message 304 is addressed to user equipment 140. The data packet in fourth message 304 comprises an indication for the high-frequency band radio access point 133 to buffer the received data packet, wherein buffered received data is to be transmitted to the user equipment only upon receipt of an additional transmit request. This means that the high-frequency band radio access point 133 is selected as redundant high-frequency band radio access point. To that end, in the example, the data packet in the fourth message 304 contains the flag "buffer data".

Upon receipt of the second message 302, containing the data packet addressed to user equipment 140, the receiving high-frequency band access point 131 inspects the data packet received in the second message 302.

Depending on the result of the inspection, the receiving high-frequency band access point 131
transmits the received data to the user equipment 140, or
buffers the received data, wherein buffered received data is transmitted to the user equipment only upon receipt of an additional transmit request.

In the example, the data packet received in the second message 302 comprises the indication for the high-frequency band radio access point 131 to transmit the data, i.e. the flag "transmit data". In the example, the high-frequency band radio access point 131 detects this flag in the inspection and transmits a fifth message 305 including received data to the user equipment 140. In this case the received data is for example the payload of the received data packet.

The second message 302 is for example downlink user data sent from the core network to the RAN Controller. The Controller knows which high-frequency band radio access point shall transmit the data and which high-frequency band radio access points shall buffer a copy of the downlink data.

After the inspection, and depending on the result of the inspection indicating that the received data is to be transmitted to the user equipment 140, a fifth message 305 is transmitted from the high-frequency band radio access point 131 to the user equipment 140. This means that received data is sent in the fifth message 305 by the serving high-frequency band radio access point 131 to the user equipment 140, via a corresponding air interface 174.

The data packets sent in the second message 302, the third message 303 and the fourth message 304 and the fifth message 305, in the example comprise the same payload data as the data packet in the first message 301. This way the downlink data 171 is transmitted packet by packet on Protocol Data Unit level to the user equipment 140.

Upon receipt of the fifth message 305, the user equipment 140 acknowledges the receipt by sending a sixth message 306, ACK, to the serving high-frequency band radio access point 131. This is not mandatory after receiving of a single payload. ACK can be send by the user equipment after receiving of a certain number of payloads. ACK indicates the latest successfully received data. The "ACK-sequence" is typically configured per user equipment.

The data packets may be provided with a sequence number. The release of data packets with certain sequence numbers may be executed on the basis of receipt of a confirmation, e.g. ACK, that data packets with the respective sequence numbers have been successfully received by user equipment 140.

Upon receipt of the sixth message 306, the serving high-frequency band radio access point 131 releases in a step 307 Protocol Data Units, e.g. the PDCP Protocol data units (PDUs) .

Afterwards a downlink data delivery status report, e.g. PDCP SN, X2-U SN, is sent in a eighth message 308 from the serving high-frequency band radio access point 131 to the controlling entity, e.g. base station 110.

Upon receipt of the eighth message 308, the controlling entity, e.g. base station 110, sends a ninth message 309 and a tenth message 310 to the redundant high-frequency band radio access point 132, and to the redundant high-frequency band radio access point 133 respectively.

The ninth message 309 and the tenth message 310 are for example downlink data delivery status reports, e.g. PDCP SN, X2-U SN. With the ninth message 309 and the tenth message 310 the controller informs the high-frequency band radio access nodes 132, 133 that the data has been successfully transmitted.

Upon receipt of the ninth message 309, the redundant high-frequency band radio access point 132 releases in a step 311 buffered Protocol Data Units, e.g. the buffered PDCP PDUs.

Upon receipt of the tenth message 310, the redundant high-frequency band radio access point 132 releases in a step 312 buffered Protocol Data Units, e.g. the buffered PDCP PDUs.

Optionally the receipt of these messages is interpreted by the respective high-frequency band radio access points as indication, that the buffered data may be released from the respective buffer.

Optionally, the data can also be additionally buffered in the controlling entity, e.g. the base station 110.

In this case the data may be released in a step 313 in the controlling entity, e.g. the base station 110, upon receipt of the eighth message 308. In this case, in the event of an unsuccessful attempt to deliver data to the user equipment 140, the controlling entity, e.g. the base station 110, may transmit the data from its buffer to another high-frequency band radio access point 134 that has not yet received any data. For example after moving of user equipment 140 into the beam 164 high-frequency band radio access point 134 is enabled to transmit data to the user equipment 140.

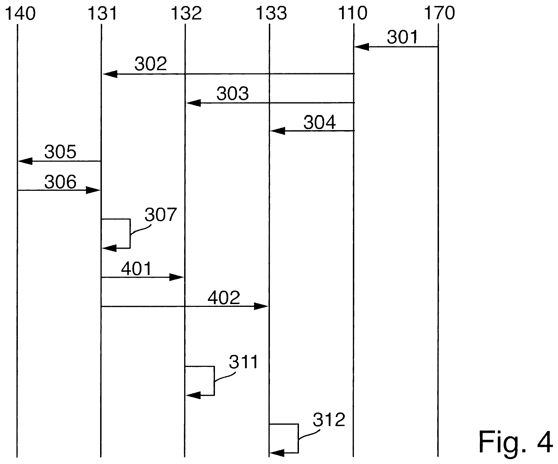

Figure 4 schematically depicts a second message sequence diagram for handling direct message exchange between high-frequency band radio access points.

In this example the serving high-frequency band radio access point 131 can directly exchange messages with the redundant high-frequency band radio access points 132, 133.

Preferably each of the high-frequency band radio access points 131, 132, 133, 134 can connect directly to any other high-frequency band radio access point 131, 132, 133, 134.

Preferably, the high-frequency band radio access points 131, 132, 133, 134 are grouped in predetermined cluster. A cluster is for example formed by all high-frequency band radio access points 131, 132, 133, 134 that are located within the coverage area 120 of the base station 110.

The connection can be via X2-interface or in-band/out-band air interface using the high-frequency band connection or via the base station 110 using low-frequency band connection.

The messages that are exchanged are depicted in Figure 4. There any message having identical content to the message of the example described in Figure 3 has the same reference numeral.

In contrast to the example of Figure 3, the eighth message 308 the ninth message 309 and the tenth message 310 are not sent. Sending message 308 to the base station 110 is advantageous if the controlling entity, e.g. base station 110, buffers data as well.

Instead, the serving high-frequency band radio access point 131 sends a downlink data delivery status report message 401, e.g. PDCP SN, X2-U SN, directly to the redundant high-frequency band radio access point 132.

Upon receipt of this downlink data delivery status report message 401, the high-frequency band radio access point 132 performs step 311 to release the buffered Protocol Data Units, e.g. buffered PDCP PDUs.

Furthermore, the serving high-frequency band radio access point 131 sends a downlink data delivery status report message 402, e.g. PDCP SN, X2-U SN, directly to the redundant high-frequency band radio access point 133.

Upon receipt of this downlink data delivery status report message 402, the high-frequency band radio access point 133 performs step 312 to release the buffered Protocol Data Units, e.g. buffered PDCP PDUs.

Preferably the serving high-frequency band radio access point 131 informs all other high-frequency band radio access points of the cluster upon receiving the acknowledgement from the user equipment 140 in the sixth message 306 directly. Preferably all high-frequency band radio access points of the cluster are informed whether they received data packets addressed to the user equipment 140 or not. The eighth message 308 as described in Figure 3 can be transmitted in addition to inform the controlling entity as well.

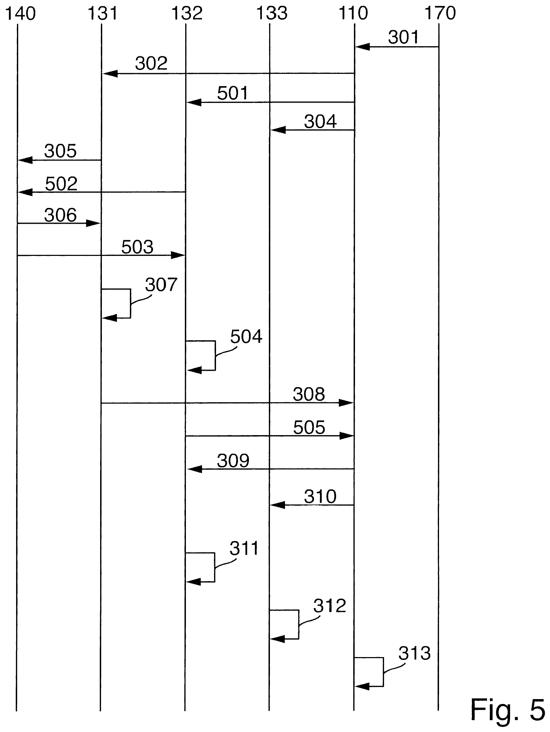

Figure 5 schematically depicts a third message sequence diagram for multiple high-frequency band radio access point handling.

In this example, two serving high-frequency band radio access points 131, 132 are selected to transmit downlink data in respective data packets to the user equipment 140.

For the data transmission via the serving high-frequency band radio access point 131, the same messages are used as described in the first sequence diagram according to figure 3. The same reference signs are used for identical messages.

For the data transmission via the other serving high-frequency band radio access point 132, the additional messages are used as described below.
According to the example of Figure 4, the third message 303 is not sent.

Instead, upon receipt of the first message 301, the controlling entity, e.g. base station 110, sends the second message 302 and another data packet in a thirteenth message 501 to high-frequency band radio access point 132.

The data packet in the thirteenth message 501 is addressed to user equipment 140. The data packet in thirteenth message 501 comprises an indication for the high-frequency band radio access point 132 to transmit the received data packet to the user equipment 140. This means that the high-frequency band radio access point 132 is selected as serving high-frequency band radio access point. To that end, in the example, the data packet in the thirteenth message 501 contains the flag "transmit data".

The payload in the data packet of thirteenth message 501 may be identical to the payload of the data packet of the second message 302, or different. Identical data is sent to provide redundancy, different data is sent to provide additional capacity or throughput.

Upon receipt of the thirteenth message 501, the serving high-frequency band radio access point 132 sends a fourteenth message 502 to the user equipment 140. In the example, the high-frequency band radio access point 132 detects the flag "transmit data" in the inspection and transmits the fourteenth message 502 including received data to the user equipment 140. In this case the received data is for example the payload of the received data packet of the thirteenth message 501.

Upon receipt of the fourteenth message 502, the user equipment 140 acknowledges the receipt by sending a fifteenth message 503, ACK, to the serving high-frequency band radio access point 132.

Upon receipt of the fifteenth message 503, the serving high-frequency band radio access point 132 releases in a step 504 the PDCP Protocol data units (PDUs).

Afterwards a downlink data delivery status report, e.g. PDCP SN, X2-U SN, is sent in a sixteenth message 505 from the serving high-frequency band radio access point 132 to the controlling entity, e.g. base station 110.

Upon receipt of the sixteenth message 505, the controlling entity, e.g. base station 110, sends optionally the ninth message 309 and the tenth message 310 to the serving high-frequency band radio access point 132, and to the redundant high-frequency band radio access point 133 respectively.

Optionally these messages are only sent if the eighth message 308 has been received alternatively or additionally.

Upon receipt of these messages the respective high-frequency band radio access point 132, 133 performs step 311 and 312 to release the PDCP PDUs respectively.

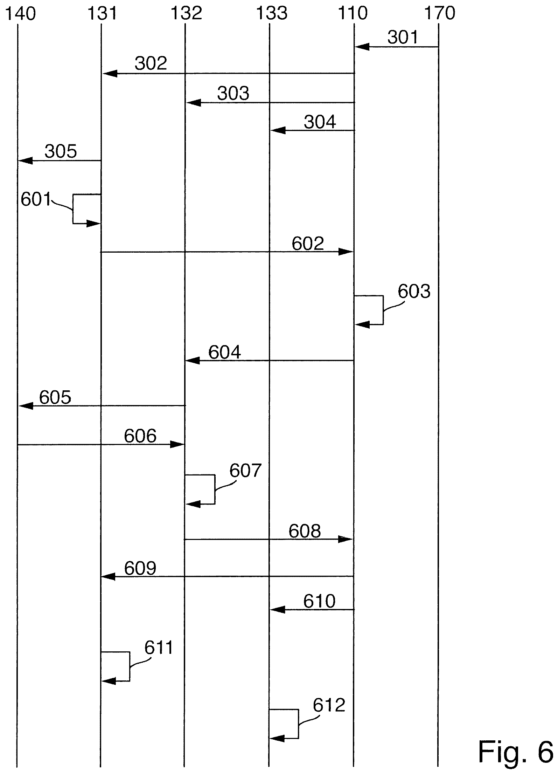

Figure 6 schematically depicts a fourth message sequence diagram for error handling.

Downlink data 171 is transmitted with the first message 301, the second message 302, the third message 303, the fourth message 304 and the fifth message 305 as described above. This means that it is attempted to transmit data from the high-frequency band radio access point 131 to the user equipment 140.

In the event that the received data are not successfully sent in the fifth message 305 by the serving high-frequency band radio access point 131 to the user equipment 140, via a corresponding air interface 174, in a step 601 an error is detected by the serving high-frequency band radio access point 131. For example the error is detected if the sixth message 306, ACK, is not received within a predetermined period of time, e.g. 10 milliseconds.

Upon detection of the error, a seventeenth message 602 is sent from the serving high-frequency band radio access point 131 to the controlling entity, e.g. base station 110.

The error is for example an indication of a Radio link failure in the seventeenth message 602.

Upon receipt of the seventeenth message 602, the controlling entity, e.g. base station 110, selects in a step 603 one of the redundant high-frequency band radio access points 132, 133. Preferably the selection is based on a link quality between the user equipment 140 and the respective high-frequency band radio access point. Preferably this information is measured by and shared between the controlling entity, e.g. the base station 110, and any of the high-frequency band access points 131, 132, 133, 134.

Afterwards an eighteenth message 604 is sent from the controlling entity to the selected serving high-frequency band radio access point 132. The data in the eighteenth message 604 is for example an additional transmit request. Preferably the additional transmit request indicates to transmit all received buffered data addressed to user equipment 140.

Upon receipt of the additional transmit request in the eighteenth message 604, the selected serving high-frequency band radio access point 132 transmits a buffered data packet addressed to user equipment 140. Preferably, upon receipt of the indication to transmit all buffered data, all buffered data is transmitted. This data is transmitted in a nineteenth message 605. This way the downlink data 171 is transmitted packet by packet to the user equipment 140. This way the handover for data transmission is very fast.

Upon receipt of nineteenth message 605, user equipment 140 acknowledges the receipt by sending a twentieth message 606, ACK, to the selected serving high-frequency band radio access point 132.

Upon receipt of the twentieth message 606, the selected serving high-frequency band radio access point 132 releases in a step 607 the PDCP Protocol data units (PDUs).

Afterwards a downlink data delivery status report, e.g. PDCP SN, X2-U SN, is sent in a twenty-first message 608 from the serving high-frequency band radio access point 132 to the controlling entity, e.g. base station 110.

Upon receipt of the twenty-first message 608, optionally the controlling entity, e.g. base station 110, sends a twenty-second message 609 and a twenty-third message 610 to the high-frequency band radio access point 131, and to the redundant high-frequency band radio access point 133 respectively.

The twenty-second message 609 and the twenty-third message 610 are for example downlink data delivery status reports, e.g. PDCP SN, X2-U SN. With the twenty-second message 609 and the twenty-third message 610 the controller informs the high-frequency band radio access nodes 131, 133 that the data has been successfully transmitted.

Upon receipt of the twenty-second message 609, the high-frequency band radio access point 131 releases in a step 611 the PDCP PDUs.

Upon receipt of the twenty-third message 610, the redundant high-frequency band radio access point 133 releases in a step 612 the PDCP PDUs.

This means that upon detection of an interruption of the wireless data transmission via the high-frequency band radio access point 131, the additional transmit request is sent to the high-frequency band radio access point 132.

The invention concerns a network node, e.g. the controlling entity, e.g. base station 110, and a high-frequency band radio access point, operable to interact by the methods as well.

The error is detected in the example by the serving high-frequency bandwidth radio access point 131.

In another option, user equipment 140 is allowed to send the transmit request to at least one other high-frequency band radio access point 132, 133 if its link quality is detected as better than the link quality to the high-frequency band radio access point 131. Upon receipt of the transmit request, according to the example, the respective high-frequency band radio access point 132, 133 sends all buffered data addressed to the user equipment 140. This way very fast forward handover is implemented.

According to the examples described above information in a header of a user data packet is used to decide if a user data packet shall be transmitted or stored in the buffer instead.

In the example described above preferably the downlink data delivery status reports, e.g. PDCP SN, X2-U SN, are used as request to release buffered data.

Furthermore a release message to instruct any of the high-frequency band radio access points to release buffered user data packets, may be sent from the network node 110 configured as master eNB to the any of the high-frequency band radio access points configured as secondary eNB.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any sequence diagrams represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for wireless data transmission comprising
sending (303, 304) a first data packet to a first high-frequency band radio access point (132, 133), wherein the first data packet is addressed to a user equipment (140),
sending (302) a second data packet to a second high-frequency band radio access point (131), wherein the second data packet is addressed to the user equipment (140),
**characterized by**
the first data packet comprising an indication for the first high-frequency band radio access point (132, 133) to buffer the received data packet, and
the second data packet comprising an indication for the second high-frequency band radio access point (131) to transmit the received data packet to the user equipment (140).

2. The method of claim 1, **characterized in that** buffered received data is to be transmitted to the user equipment (140) only upon receipt of an additional transmit request, and
**in that** upon detection (601) of an interruption of the wireless data transmission via the second high-frequency band radio access point (131), the additional transmit request is sent to the first high-frequency band radio access point (132).

3. The method according to any of claim 2, **characterized in that** the request to transmit data is sent (604) upon receipt of an error message (602).

4. The method according to any of claims 1 to 3, **characterized in that** one of the high-frequency band radio access points (132, 133, 134) is selected (603) to receive the first data packet as the first high-frequency band radio access point (132).

5. A method for wireless data transmission at a first high-frequency band radio access point (132, 133) comprising:
receiving (303) a data packet addressed to a user equipment (140),
inspecting the received data packet,
**characterized by**
depending on the result of the inspection:
transmitting (605) the received data to the user equipment (140),
buffering the received data, or
releasing (311, 312) buffered data.

6. The method of claim 5, **characterized in that** buffered data is released (311, 312, 611, 612) upon receipt (308, 309, 401, 402, 609, 610) of a corresponding request message.

7. The method of claim 5 or 6, **characterized in that** buffered received data is transmitted to the user equipment (140) only upon receipt of an additional transmit request, and
**in that** upon detection (601) of an interruption of the wireless data transmission via a second high-frequency band radio access point (131), the additional transmit request is received (604) by the first high-frequency band radio access point.

8. The method according to any of claims 5 to 7, **characterized in that** upon detection (601) of an interruption of the wireless data transmission via a second high-frequency band radio access point (131), the second high-frequency band radio access point (131) sends (602) an error message.

9. A network node (110) comprising
a sender adapted to
send (303, 304) a first data packet to a first high-frequency band radio access point (132, 133), wherein the first data packet is addressed to a user equipment (140), wherein the sender is further adapted to
send (302) a second data packet to a second high-frequency band radio access point (131),
wherein the second data packet is addressed to the user equipment (140),
**characterized by**
the first data packet comprising an indication for the first high-frequency band radio access point (132, 133) to buffer the received data packet, and
the second data packet comprising an indication for the second high-frequency band radio access point (131) to transmit the received data packet to the user equipment (140).

10. The network node (110) of claim 9, **characterized in that** the network node (110) is adapted to buffer data addressed to the user equipment (140), adapted to receive a request (308) to release buffered data, and to release buffered data in response to the request.

11. The network node (110) of according to claim 9 or 10, adapted to send a request (309, 310, 401, 402, 609, 610) to release buffered data.

12. A high-frequency band radio access point (131, 132, 133, 134), comprising
a receiver adapted to receive (303) a data packet addressed to a user equipment (140),
a processor adapted to inspect the received data packet,
**characterized by**
the processor being adapted to depending on the result of the inspection:
transmit (305) the received data to the user equipment (140) via an air interface,
buffer the received data in storage, or
release (311, 312) buffered data.

13. The high-frequency band radio access point (131, 132, 133, 134) according to claim 12, **characterized in that** the receiver is adapted to receive (309, 310, 401, 402, 609, 610) a request to release buffered data, and to release buffered data in response to the request.

14. The high-frequency band radio access point (131, 132, 133, 134) according to claim 12 or 13, **characterized in that**, buffered received data is transmitted to the user equipment (140) only upon receipt of an additional transmit request, and by
the receiver adapted to receive (604) the additional transmit request, and
the processor adapted to transmit (605) the buffered received data to the user equipment (140) via the air interface.

15. A computer program for wireless data transmission, wherein said computer program, when executed on a computer, causes the computer to perform the steps of the method according to any of claims 1 to 8.

16. A system for wireless data transmission, wherein the system comprises a high-frequency band radio access point (131, 132, 133, 134) according to claim 12, and a user equipment (140), wherein the user equipment (140), upon receipt of a message (305, 502, 605) from the high-frequency band radio access point (131, 132), acknowledges the receipt by sending a message (306, 503, 606), ACK, to the high-frequency band radio access point (131, 132).

17. The system according to claim 16, wherein upon receipt of the message (306, 503), ACK, the high-frequency band radio access point (132) releases (307, 504) buffered PDCP Protocol data units, PDUs.

## Patentansprüche

1. Verfahren für eine drahtlose Datenübertragung, das Folgendes umfasst:
Senden (303, 304) eines ersten Datenpakets an einen ersten Hochfrequenzband-Funkzugangspunkt (132, 133), wobei das erste Datenpaket an ein Anwendergerät (140) adressiert ist,
Senden (302) eines zweiten Datenpakets an einen zweiten Hochfrequenzband-Funkzugangspunkt (131), wobei das zweite Datenpaket an das Anwendergerät (140) adressiert ist,
**dadurch gekennzeichnet, dass**
das erste Datenpaket eine Angabe für den ersten Hochfrequenzband-Funkzugangspunkt (132, 133) enthält, um das empfangene Datenpaket zwischenzuspeichern, und
das zweite Datenpaket eine Angabe für den zweiten Hochfrequenzband-Funkzugangspunkt (131) enthält, um das empfangene Datenpaket an das Anwendergerät (140) zu senden.

2. Verfahren nach Anspruch 1, **dadurch gekennzeichnet, dass** zwischengespeicherte empfangene Daten nur bei Empfang einer zusätzlichen Sendeanforderung an das Anwendergerät (140) zu senden sind, und
dass bei Detektion (601) einer Unterbrechung der drahtlosen Datenübertragung über den zweiten Hochfrequenzband-Funkzugangspunkt (131) die zusätzliche Sendeanforderung an den ersten Hochfrequenzband-Funkzugangspunkt (132) gesendet wird.

3. Verfahren nach einem von Anspruch 2, **dadurch gekennzeichnet, dass** die Anforderung, Daten zu senden, bei Empfang einer Fehlernachricht (602) gesendet wird.

4. Verfahren nach einem der Ansprüche 1 bis 3,
**dadurch gekennzeichnet, dass** einer der Hochfrequenzband-Funkzugangspunkte (132, 133, 134) ausgewählt wird (603), um das erste Datenpaket als den ersten Hochfrequenzband-Funkzugangspunkt (132) zu empfangen.

5. Verfahren für eine drahtlose Datenübertragung an einem ersten Hochfrequenzband-Funkzugangspunkt (132, 133), das Folgendes umfasst:
Empfangen(303) eines Datenpakets, das an ein Anwendergerät (140) adressiert ist,
Prüfen des empfangenen Datenpakets,
**gekennzeichnet durch:**
abhängig von dem Ergebnis der Überprüfung:
Senden (605) der empfangenen Daten an das Anwendergerät (140),
Zwischenspeichern der empfangenen Daten oder
Freigeben (311, 312) von zwischengespeicherten Daten.

6. Verfahren nach Anspruch 5, **dadurch gekennzeichnet, dass** zwischengespeicherte Daten bei Empfang (308, 309, 401, 402, 609, 610) einer entsprechenden Anforderungsnachricht freigegeben werden (311, 312, 611, 612) .

7. Verfahren nach Anspruch 5 oder 6, **dadurch gekennzeichnet, dass** zwischengespeicherte empfangene Daten nur bei Empfang einer zusätzlichen Sendeanforderung an das Anwendergerät (140) gesendet werden, und
dadurch, dass bei Detektion (601) einer Unterbrechung der drahtlosen Datenübertragung über einen zweiten Hochfrequenzband-Funkzugangspunkt (131) die zusätzliche Sendeanforderung durch den ersten Hochfrequenzband-Funkzugangspunkt empfangen wird (604).

8. Verfahren nach einem der Ansprüche 5 bis 7,
**dadurch gekennzeichnet, dass** bei Detektion (601) einer Unterbrechung der drahtlosen Datenübertragung über einen zweiten Hochfrequenzband-Funkzugangspunkt (131) der zweite Hochfrequenzband-Funkzugangspunkt (131) eine Fehlernachricht sendet (602).

9. Netzknoten (110), der Folgendes umfasst:
einen Sender, der ausgelegt ist zum:
Senden (303, 304) eines ersten Datenpakets an einen ersten Hochfrequenzband-Funkzugangspunkt (132, 133), wobei das erste Datenpaket an ein Anwendergerät (140) adressiert ist, wobei der Sender ferner ausgelegt ist zum:
Senden (302) eines zweiten Datenpakets an einen zweiten Hochfrequenzband-Funkzugangspunkt (131),
wobei das zweite Datenpaket an das Anwendergerät (140) adressiert ist,
**dadurch gekennzeichnet, dass**
das erste Datenpaket eine Angabe für den ersten Hochfrequenzband-Funkzugangspunkt (132, 133) enthält, um das empfangene Datenpaket zwischenzuspeichern, und
das zweite Datenpaket eine Angabe für den zweiten Hochfrequenzband-Funkzugangspunkt (131) enthält, um das empfangene Datenpaket an das Anwendergerät (140) zu senden.

10. Netzknoten (110) nach Anspruch 9, **dadurch gekennzeichnet, dass** der Netzknoten (110) ausgelegt ist, Daten, die an das Anwendergerät (140) adressiert sind, zwischenzuspeichern, ausgelegt ist, eine Anforderung (308), zwischengespeicherte Daten freizugeben, zu empfangen und zwischengespeicherte Daten als Reaktion auf die Anforderung freizugeben.

11. Netzknoten (110) nach Anspruch 9 oder 10, der ausgelegt ist, eine Anforderung (309, 310, 401, 402, 609, 610), zwischengespeicherte Daten freizugeben, zu senden.

12. Hochfrequenzband-Funkzugangspunkt (131, 132, 133, 134) der Folgendes umfasst:
einen Empfänger, der ausgelegt ist, ein Datenpaket, das an ein Anwendergerät (140) adressiert ist, zu empfangen (303),
einen Prozessor, der ausgelegt ist, das empfangene Datenpaket zu prüfen,
**dadurch gekennzeichnet, dass**
der Prozessor abhängig von dem Ergebnis der Überprüfung ausgelegt ist zum:
Senden (305) der empfangenen Daten an das Anwendergerät (140) über eine Luftschnittstelle,
Zwischenspeichern der empfangenen Daten in einem Speicher oder
Freigeben (311, 312) zwischengespeicherter Daten.

13. Hochfrequenzband-Funkzugangspunkt (131, 132, 133, 134) nach Anspruch 12, **dadurch gekennzeichnet, dass** der Empfänger ausgelegt ist, eine Anforderung, zwischengespeicherte Daten freizugeben, zu empfangen (309, 310, 401, 402, 609, 610) und zwischengespeicherte Daten als Reaktion auf die Anforderung freizugeben.

14. Hochfrequenzband-Funkzugangspunkt (131, 132, 133, 134) nach Anspruch 12 oder 13, **dadurch gekennzeichnet, dass** zwischengespeicherte empfangene Daten nur bei Empfang einer zusätzlichen Sendeanforderung an das Anwendergerät gesendet werden, und dass
der Empfänger ausgelegt ist, die zusätzliche Sendeanforderung zu empfangen (604), und
der Prozessor ausgelegt ist, die zwischengespeicherten empfangenen Daten über die Luftschnittstelle an das Anwendergerät (140) zu senden.

15. Computerprogramm für eine drahtlose Datenübertragung, wobei das Computerprogramm dann, wenn es auf einem Computer ausgeführt wird, bewirkt, dass der Computer die Schritte des Verfahrens nach einem der Ansprüche 1 bis 8 ausführt.

16. System für eine drahtlose Datenübertragung, wobei das System einen Hochfrequenzband-Funkzugangspunkt (131, 132, 133, 134) nach Anspruch 12 und ein Anwendergerät (140) umfasst, wobei das Anwendergerät (140) bei Empfang einer Nachricht (305, 502, 605) von dem Hochfrequenzband-Funkzugangspunkt (131, 132) den Empfang durch Senden einer Nachricht (306, 503, 606), ACK, an den Hochfrequenzband-Funkzugangspunkt (131, 132) bestätigt.

17. System nach Anspruch 16, wobei bei Empfang der Nachricht (306, 503), ACK, der Hochfrequenzband-Funkzugangspunkt (132) zwischengespeicherte PDCP-Protokolldateneinheiten, PDCP-PDUs, freigibt (307, 504).

## Revendications

1. Procédé de transmission de données sans fil, comprenant
l'envoi (303, 304) d'un premier paquet de données à un premier point d'accès radio en bande haute fréquence (132, 133), le premier paquet de données étant adressé à un équipement utilisateur (140),
l'envoi (302) d'un deuxième paquet de données à un deuxième point d'accès radio en bande haute fréquence (131), le deuxième paquet de données étant adressé à l'équipement utilisateur (140),
**caractérisé en ce que**
le premier paquet de données comprend une indication au premier point d'accès radio en bande haute fréquence (132, 133) de tamponner le paquet de données reçu, et
le deuxième paquet de données comprend une indication au deuxième point d'accès radio en bande haute fréquence (131) de transmettre le paquet de données reçu à l'équipement utilisateur (140).

2. Procédé selon la revendication 1, **caractérisé en ce que** des données reçues tamponnées ne doivent être transmises à l'équipement utilisateur (140) qu'en cas de réception d'une requête de transmission additionnelle, et
**en ce qu'**en cas de détection (601) d'une interruption de la transmission de données sans fil par le biais du deuxième point d'accès radio en bande haute fréquence (131), la requête de transmission additionnelle est envoyée au premier point d'accès radio en bande haute fréquence (132).

3. Procédé selon l'une quelconque de la revendication 2, **caractérisé en ce que** la requête de transmission de données est envoyée (604) en cas de réception d'un message d'erreur (602).

4. Procédé selon l'une quelconque des revendications 1 à 3, **caractérisé en ce que** l'un des points d'accès radio en bande haute fréquence (132, 133, 134) est sélectionné (603), en tant que premier point d'accès radio en bande haute fréquence (132), pour recevoir le premier paquet de données.

5. Procédé de transmission de données sans fil au niveau d'un premier point d'accès radio en bande haute fréquence (132, 133), comprenant :
la réception (303) d'un paquet de données adressé à un équipement utilisateur (140),
l'inspection du paquet de données reçu,
**caractérisé par**
en fonction du résultat de l'inspection :
la transmission (605) des données reçues à l'équipement utilisateur (140),
le tamponnage des données reçues, ou
la libération (311, 312) de données tamponnées.

6. Procédé selon la revendication 5, **caractérisé en ce que** des données tamponnées sont libérées (311, 312, 611, 612) en cas de réception (308, 309, 401, 402, 609, 610) d'un message de requête correspondant.

7. Procédé selon la revendication 5 ou 6, **caractérisé en ce que** des données reçues tamponnées ne sont transmises à l'équipement utilisateur (140) qu'en cas de réception d'une requête de transmission additionnelle, et
**en ce qu'**en cas de détection (601) d'une interruption de la transmission de données sans fil par le biais d'un deuxième point d'accès radio en bande haute fréquence (131), la requête de transmission additionnelle est reçue (604) au niveau du premier point d'accès radio en bande haute fréquence.

8. Procédé selon l'une quelconque des revendications 5 à 7, **caractérisé en ce qu'**en cas de détection (601) d'une interruption de la transmission de données sans fil par le biais d'un deuxième point d'accès radio en bande haute fréquence (131), le deuxième point d'accès radio en bande haute fréquence (131) envoie (602) un message d'erreur.

9. Nœud (110) de réseau, comprenant
un envoyeur adapté à
envoyer (303, 304) un premier paquet de données à un premier point d'accès radio en bande haute fréquence (132, 133), le premier paquet de données étant adressé à un équipement utilisateur (140), l'envoyeur étant adapté en outre à
envoyer (302) un deuxième paquet de données à un deuxième point d'accès radio en bande haute fréquence (131),
le deuxième paquet de données étant adressé à l'équipement utilisateur (140),
**caractérisé en ce que**
le premier paquet de données comprend une indication au premier point d'accès radio en bande haute fréquence (132, 133) de tamponner le paquet de données reçu, et
le deuxième paquet de données comprenant une indication au deuxième point d'accès radio en bande haute fréquence (131) de transmettre le paquet de données reçu à l'équipement utilisateur (140).

10. Nœud (110) de réseau selon la revendication 9, le nœud (110) de réseau étant **caractérisé en ce qu'**il est adapté à tamponner des données adressées à l'équipement utilisateur (140), adapté à recevoir une requête (308) de libération de données tamponnées et à libérer des données tamponnées en réponse à la requête.

11. Nœud (110) de réseau selon la revendication 9 ou 10, adapté à envoyer une requête (309, 310, 401, 402, 609, 610) de libération de données tamponnées.

12. Point d'accès radio en bande haute fréquence (131, 132, 133, 134), comprenant
un récepteur adapté à recevoir (303) un paquet de données adressé à un équipement utilisateur (140),
un processeur adapté à inspecter le paquet de données reçu,
**caractérisé en ce que**
le processeur est adapté à, en fonction du résultat de l'inspection :
transmettre (305) les données reçues à l'équipement utilisateur (140) par le biais d'une interface air,
tamponner les données reçues dans une unité de stockage, ou
libérer (311, 312) des données tamponnées.

13. Point d'accès radio en bande haute fréquence (131, 132, 133, 134) selon la revendication 12, **caractérisé en ce que** le récepteur est adapté à recevoir (309, 310, 401, 402, 609, 610) une requête de libération de données tamponnées et à libérer des données tamponnées en réponse à la requête.

14. Point d'accès radio en bande haute fréquence (131, 132, 133, 134) selon la revendication 12 ou 13, **caractérisé en ce que** des données reçues tamponnées ne sont transmises à l'équipement utilisateur (140) qu'en cas de réception d'une requête de transmission additionnelle, et **en ce que**
le récepteur est adapté à recevoir (604) la requête de transmission additionnelle, et
le processeur est adapté à transmettre (605) les données reçues tamponnées à l'équipement utilisateur (140) par le biais de l'interface air.

15. Programme d'ordinateur pour la transmission de données sans fil, ledit programme d'ordinateur, lorsqu'il est exécuté sur un ordinateur, amenant l'ordinateur à accomplir les étapes du procédé selon l'une quelconque des revendications 1 à 8.

16. Système de transmission de données sans fil, lequel système comprend un point d'accès radio en bande haute fréquence (131, 132, 133, 134) selon la revendication 12 et un équipement utilisateur (140), l'équipement utilisateur (140), en cas de réception d'un message (305, 502, 605) en provenance du point d'accès radio en bande haute fréquence (131, 132), acquitte la réception en envoyant un message (306, 503, 606), ACK, au point d'accès radio en bande haute fréquence (131, 132).

17. Système selon la revendication 16, dans lequel, en cas de réception du message (306, 503), ACK, le point d'accès radio en bande haute fréquence (132) libère (307, 504) des unités de données de protocole, PDU, PDCP tamponnées.
